# EUROPÄISCHE PATENTSCHRIFT

(11) **EP 0 610 668 B1**
(45) Veröffentlichungstag und Bekanntmachung des Hinweises auf die Patenterteilung: **01.05.1996**
(21) Anmeldenummer: 94100329.5
(22) Anmeldetag: 12.01.1994
(51) Int. Cl.: F01D 5/30, F01D 5/02

(54) **Einrichtung zur axialen Laufschaufelsicherung und zur Beseitigung von Rotorunwuchten für axial durchströmte Verdichter oder Turbinen**
Device for locking axial rotor blades and for eleminating rotor imbalance
Dispositif pour le verrouillage d'aubes de rotor à entrée axiale et pour l'élimination du déséquilibre du rotor

(30) Priorität: 14.01.1993 DE 4300773
(43) Veröffentlichungstag der Anmeldung: 17.08.1994
(73) Patentinhaber: MTU MOTOREN- UND TURBINEN-UNION MÜNCHEN GMBH, D-80976 München (DE)
(72) Erfinder: Maar, Karl, D-8068 Pfaffenhofen (DE)
(74) Vertreter: Baum, Wolfgang, Dipl.-Ing.

(56) Entgegenhaltungen:
- EP-A- 0 437 977
- DE-B- 1 051 286
- GB-A- 672 401
- GB-A- 691 380
- US-A- 3 653 781

## Beschreibung

Die Erfindung bezieht sich auf eine Einrichtung nach dem Oberbegriff des Patentanspruchs 1.

Bei einer derartigen aus der EP-A 0437 977 bekannten Einrichtung fungiert die Laufschaufel als axiale Sicherung eines lediglich fallweise mit seinem äußeren Randende an einer Ausnehmung des Schaufelfußes verankerbaren, im Querschnitt etwa sichelförmigen Unwuchtgewichts; dabei befindet sich des Unwuchtgewicht in einer einseitig vom Schaufelfuß verschlossenen Vertiefung zwischen Fußende und Nutgrund. Sämtliche Laufschaufeln werden lediglich in einer axialen Richtung durch einen Schnappring gesichert, der sich außen am Umfang zwischen Radkranz und Schaufelfußenden erstreckt und dabei am oberen Ende in Rinnen von axial vorstehenden Absätzen der Schaufelfüße eingreift.

Bei festgestellter örtlicher Scheiben- oder Rotorunwucht muß zunächst die axiale Sicherung gelöst und eine betreffende Laufschaufel aus der Axialnut herausgezogen werden, um das Gewicht zusammen mit der Schaufel in die Axialnut einschieben zu können. Die einseitige axiale Schaufelsicherung Und die an der Schaufel sicherbare Gewichtsanordnung setzen eine verhältnismäßig aufwendige und teuere Schaufelbefestigung voraus.

Eine aus der DE-AS 10 51 286 bekannte Einrichtung zur axialen Schaufelsicherung setzt eine komplizierte Schaufelkonstruktion, insbesondere mit einem fußseitigen Anlageflansch voraus, mit dem die Schaufel an einer Seite des Radkranzes in einer Richtung axial gesichert wird. Zwecks Sicherung in der anderen axialen Richtung sieht der bekannte Fall eine als Federblech ausgebildeten Streifen vor; der Streifen wird vor Einbau der Schaufel in eine axiale Rinne am Nutgrund eingesetzt; die Rinne bildet eine einseitige Vertieferung aus, die nach einer Radkranzseite divergierend erweitert ist; in gegen die Vertiefung niedergedrückter Position des Streifens wird die Schaufel von einer Seite in die Axialnut eingeschoben; der aus der Vertiefung radial auffedernde Streifen bildet im Bereich einer Ausnehmung des Anlageflansches eine umgebogenen Anschlag aus, der die Schaufel in der anderen Richtung axial sichert; ein übriger umgebogener Anschlag des Streifens sichert diesen am Radkranz auf der von der Vertiefung abgewandten Seite. Im bekannten Fall ist keine Unwuchtkompensation vorgesehen. Dies gilt auch für Alternativen des bekannten Falles, wonach z.B. die Rinne über ihre Gesamtlänge eine gleichförmige Vertiefung einschließt und der Federstreifen eine nach unten gerichtete U-förmige Kröpfung aufweist.

Der Erfindung liegt die Aufgabe zugrunde, eine Einrichtung nach der eingangs genannten Art anzugeben, mit der ohne besonderen konstruktiven Bauaufwand, insbesondere an den Schaufelfüßen und am Radkranz, eine beidseitige axiale Schaufelsicherung und die Beherrschung von Rotorunwuchten auf vergleichsweise einfache Weise erreicht wird.

Die gestellte Aufgabe ist mit den im Kennzeichnungsteil des Patentanspruchs 1 enthaltenen Merkmalen erfindungsgemäß gelöst.

Gemäß der Erfindung ergibt sich folgendes:

Sämtliche Füllstücke nebst jeweiligen Sicherungsblech füllen im Einbauzustand die betreffenden Vertiefungen über die gesamte axiale Nutlänge sowie im Querschnitt komplett aus; auf diese Weise wird eine gute örtliche Sekundär-Strom-Abdichtung an der Radscheibe bzw. am Radkranz erzielt. Auf verhältnismäßig einfache Weise werden die Schaufeln und die Füllstücke bzw. Wuchtmassen gleichzeitig beidseitig axial gesichert. In einer ersten Einbau-Konfiguration können sämtliche Vertiefungen einschließlich eingebauter Sicherungsbleche mit Füllstücken jeweils gleichen spezifischen Gewichts ausgefüllt sein. Stellt sich eine örtliche Rotor- oder Restunwucht an der Scheibe heraus, so braucht z.B. lediglich nur ein Lappen oder Endteil des Bleches in eine achsparallele Lage umgebogen zu werden, um ein Füllstück von einer Seite aus axial herauszuziehen und durch ein äußerlich gleichförmig konkuriertes Füllstück mit unwuchtspezifische Masse zu ersetzen. Die Erfindung wäre auch so durchführbar, daß zunächst die Füllstücke mit jeweils gleichem spezifischen Gewicht und dann die Sicherungsbleche eingesetzt werden und hierauf die Umbiegung der Lappen oder Endteile- mit Ausnahme jeweils genannten einen Lappens oder Endteils - erfolgt, das das Blech auf einer Seite axial sichern soll; mit anderen Worten: Es erfolgt die Wuchtung in einem Zustand, in dem dieser eine Lappen sich jeweils noch in achsparalleler Lage befindet; nach Feststellung einer Unwucht kann nun direkt in axialer Richtung das betreffende Füllstück durch ein anderes mit jedoch abweichender spezifischer Wuchtmasse ersetzt werden, woraufhin sämtliche über dem Scheibenumfang achsparallel vorstehenden Lappen radial umgebogen werden.

Ferner besteht die vorteilhafte Möglichkeit, die Sicherungsbleche vor der Montage mit auf einer Seite bereits fertig umgebogenen Lappen oder Endteilen bereitzustellen. Voraussetzung für die zuvor besprochenen Maßnahmen ist es, daß Füllstücke und Sicherungsbleche mit einem leicht "strammen" Sitz in der Vertiefung -zwischen Fußende und Nutgrund - angeordnet sind. Nicht weiter dargestellte kleine Ösen, Bohrungen, Vertiefungen oder Ausnehmungen an den Füllstücken können das Herausziehen zwecks Gewichtsaustausches bzw. für die Demontage mittels eines Werkzeugs erleichtern.

Durch die dargestellten Maßnahmen lassen sich ferner häufige Umbiegungen und frühzeitige Materialermüdungen der Sicherungsbleche auf ein Mindestmaß reduzieren. Die Bereitstellung der Sicherungsbleche und deren gelegentliche Erneuerung und von gewichtlich unwuchtspezifisch abgestimmten Füllstücken ist deutlich weniger kostenintensiv zu veranschlagen, als hoch-komplizierte, im Regelfall nur einseitig axial die Schaufeln sichernde Maßnahmen mit Nasen oder Vorsprüngen an Schaufeln und Radkranz mit dazwischen über dem Umfang eingesetzten Halte- und Dichtplatten, die zudem einen hohen Montageaufwand nach sich ziehen. Mit den zuletzt genannten Maßnahmen lassen sich im Stand der Technik keine Unwuchtprobleme montagefreundlich lösen.

Dadurch, daß sich bei der Erfindung eckenseitig weich gerundete bzw. etwa im Querschnitt halbkreisförmige Füllstücke einsetzen lassen, die auf die betreffenden Gegenflächen der Vertiefungen genau abgestimmt sind, kann eine örtlich große und im wesentlichen gleichförmig verteilte Flächenbelastung am Radkranz erzielt werden.

Vorteilhafte Ausgestaltungen der Erfindung ergeben sich aus den Merkmalen der Patentansprüche 2 bis 13; anhand der Zeichnungen ist die Erfindung beispielsweise weiter erläutert; es zeigen:
- Fig. 1: einen Längsschnitt der eingebauten und fertig montierten Einrichtung in Zuordnung zu oben und unten abgebrochen dargestellten Abschnitten einer Laufschaufel und einer Radscheibe mit Radkranz,
- Fig. 2: eine Draufsicht des Sicherungsbleches aus Fig.1 in komplett gestreckter Gestalt,
- Fig. 3: einen Längsschnitt der eingebauten und fertig montierten Einrichtung in Zuordnung zu oben und unten abgebrochen dargestellten Abschnitten einer Laufschaufel und einer Radscheibe mit Radkranz unter Verdeutlichung eines gegenüber Fig. 1 ab-gewandelten Sicherungsbleches, das aus zwei Blechstreifen besteht,
- Fig. 4: eine Seitenansicht des Sicherungsbleches aus Fig. 3 in komplett gestreckter Gestalt,
- Fig. 4a: eine Draufsicht des Sicherungsbleches nach Fig.4,
- Fig. 5: einen frontal gesehenen Radkranzausschnitt unter Verdeutlichung der fertig montierten Einrichtung nach Fig. 1 und 2 und
- Fig. 6: einen frontal gesehenen Radkranzausschnitt unter Verdeutlichung der Einrichtung nach Fig. 3 und 4.

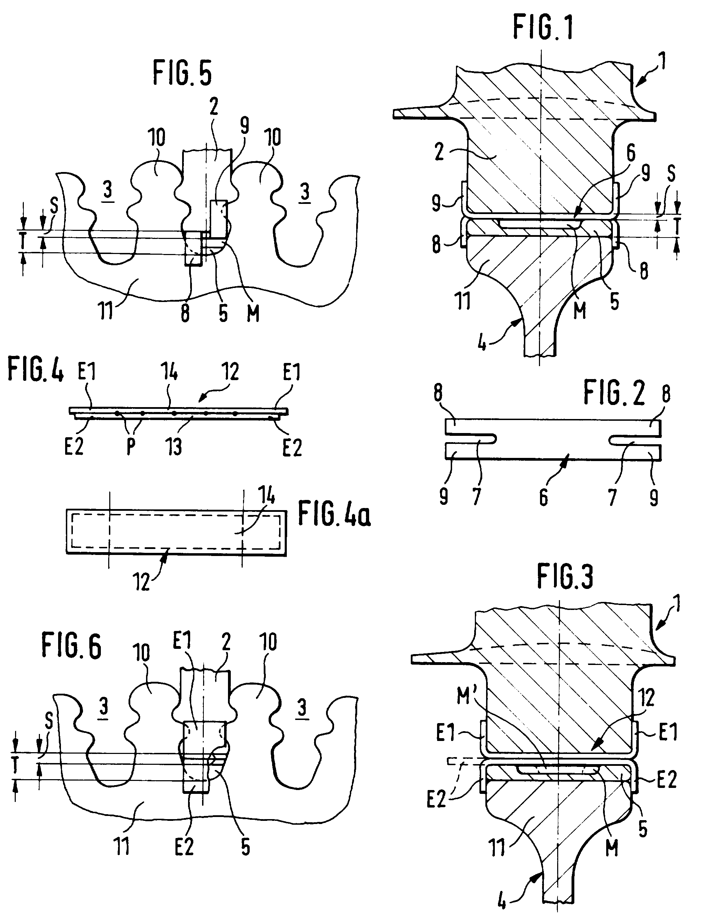

Die Fig. 1 bis 6 veranschaulichen die Einrichtung zur axialen Laufschaufelsicherung und zur Beseitigung von Rotorunwuchten bei einem axial durchströmten Verdichter oder einer Turbine eines Gasturbinentriebwerks; dabei sind die Laufschaufeln 1 mit ihren Schaufelfüßen 2 an gleichmäßig über dem Umfang verteilten Axialnuten 3 einer Radscheibe 4 verankert; jede Axialnut 3 enthält eine zwischen dem Nutgrund und dem Fußende ausgebildete Vertiefung T; in jede Vertiefung T soll ein auf dem Nutgrund aufsitzendes Füllstück 5 und ein Sicherungsblech 6 bzw. 12 eingesetzt sein; das Sicherungsblech 6 bzw. 12 überbrückt einen längs der Vertiefung T verlaufenden Spalt S, zwischen Fußende und Füllstück 5 und ist fertigen Einbauzustand an beiden aus der Vertiefung T herausragenden Enden einander entgegengerichtet gegen Stirnflächen des Füllstücks 5, der Radscheibe 4 bzw. des Radkranzes 11 und des Schaufelfußes 2 umgebogen; eine ermittelte Rotorunwucht kann durch mindestens eine derartiges Füllstück 5 gewichtlich ausgeglichen werden.

In einer ersten Ausführungsform und in Anwendung auf Fig.1, 2 und 5 weist das Sicherungsblech 6 an beiden Enden jeweils zwei durch einen Längsschlitz 7 voneinander getrennte Lappen 8, 9 auf, von denen der jeweils ein Lappen 9 gegen Stirnflächen der Schaufelfüße 2 und eines Scheibenhöckers 10, der jeweils andere Lappen 8 gegen Stirnflächen des Radkranzes 11 und des Füllstücks 5 umgebogen wird.

In Anwendung auf Fig. 3, 4 und 6 besteht das Sicherungsblech 12 aus zwei Blechstreifen 13, 14, die unter Belassung unverbundener Endteile E1, E2 miteinander verlötet oder z.B. an Punkten P (Fig.4) verschweißt sind; dabei wird jeweils das eine Endteil E1 gegen einen Schaufelfuß 2 und Stirnflächen zweier benachbarter Scheibenhöcker 10, das andere Endteil E2 jeweils gegen das Füllstück 5 und eine Stirnfläche am Radkranz 11 umgebogen.

Wie insbesondere aus Fig. 5 oder 6 erkennbar ist, bilden die umgebogenen Lappen 8, 9 oder Endteile E1, E2 des Sicherungsbleches 6 bzw. 12 zusätzlich eine randseitige Abdichtung der Axialnut 3 und der das Füllstück 5 enthaltenden Vertiefung T aus. Unterschiedlich länger bzw. breiter vorgefertigte Lappen 8, 9 bzw. Endteile E1, E2 können diesem Sachverhalt förderlich sein.

Die grundsätzlich jeweils mit gleichförmiger Umrißkontur gestalteten Füllstücke 5 können z.B. durch unterschiedlich große Materialausnehmungen M bzw. M' (Fig. 1) örtlich angepaßte Wuchtmassen bzw. Wuchtelemente ausbilden; die Füllstücke 5 können dabei sämtlichst aus einem Werkstoff mit einem niedrigeren spezifischen Gewicht als der Werkstoff der Radscheibe 4 gefertigt sein.

Um eine vorhandene Rotor- oder Scheibenunwucht am äußeren Umfang des Radkranzes 11 der Radscheibe 4 auszugleichen, kann das betreffende als Wuchtelement auswählbare Füllstück 5 mit einer unwuchtspezifischen Materialfüllung ausgestattet sein.

Dabei kann es sich um eine Füllung aus Bleischrot oder dergleichen handeln. Die Füllung kann in eine von außen verschließbare Ausnehmung oder Sackloch-Bohrung des betreffenden Füllstücks eingebracht werden; je nach Größe der Bohrung, und damit der Füllmenge kann so das notwendige Wuchtelement bereitgestellt werden.

Ferner besteht z.B. die Möglichkeit, die Fullstücke 5 aus einem nicht-rostenden Stahl oder aus einem ingenieur-keramischen Werkstoff oder aus einem durch Fasern verstärkten Kunststoff anzufertigen. Bei metallischen Werkstoffen können geeignete Prägeverfahren verwendet werden, bei denen zugleich die erforderlichen Ausnehmungsgrößen -und- Arten oder Sicken bzw. Noppen in den Ausnehmungen vorgefertigt werden können, woraus jeweils wuchtspezifische Anpassungen hervorgehen.

Für die Durchführung der Erfindung ist es vorteilhaft, wenn geeignete Ablagen für die Füllstücke 5 bereitgestellt werden, wobei den Ablagen Gewichts-Klassifizierungen zugeordnet sind, so daß rasch das benötigte Füllstück als Wuchtelement herausgegriffen werden kann.

Wie aus Fig. 2, 3, 5 und 6 erkennbar ist, sind die Füllstücke 5 auf die Länge und die Form der Vertiefung T - zwischen Sicherungsblech 6 bzw. 12 und Nutgrund - abgestimmt gestaltet; dabei sind die Füllstücke 5 zumindestens teilweise über ihre Längenerstreckung hinweg mit einem eckenseitig weich gerundeten oder einem etwa halbkreisförmigen Querschnitt seitlich und unten in der Vertiefung T gehalten (Fig.6).

Wie ferner aus Fig. 6 erkennbar, besteht dort das Sicherungsblech 12 aus zwei unterschiedlich breiten Blechstreifen 13, 14. Auf diese Weise ist das Sicherungsblech 12 den schrägen Konturverläufen der Vertiefung T bzw. Axialnut 3 angepaßt und bei gutem Sitz wird hierdurch die Abdichtung optimiert.

Gemäß Fig. 3 und 4 ist das Sicherungsblech 12 bezüglich der umzubiegenden Endteile E1, E2 aus zwei unterschiedlich langen Blechstreifen 13, 14 zusammengesetzt.

Unter anderem wird eine erleichterte Montage dadurch erreicht, daß das jeweilige Sicherungsblech 6 bzw.12 mit bereits am einen Ende einander entgegenrichtet umgebogenen Lappen 7, 8 oder Endteilen E1, E2 angewendet werden kann.

Für den Aus- oder Einbau eines Füllstücks 5 ist es bei der vorliegenden Erfindung nicht notwendig, die betreffende Laufschaufel 1 relativ zur Axialnut 3 zu verrücken oder gar die Schaufel 1 aus der Axialnut 8 entfernen zu müssen; sinngemäß gilt dies auch für den Aus- oder Einbau des Sicherungsbleches 6 bzw. 12.

Für die Motage geht man so vor, daß der Reihe nach sämtliche Laufschaufeln 1, dann sämtliche Füllstücke 5 - mit zunächst jeweils gleichem Eigengewicht - und dann sämtliche Sicherungsbleche 6 bzw. 12 eingesetzt und abschließend sowohl die Schaufeln als auch die Füllstücke beidseitig axial sichernd umgebogen werden. Gemäß Fig. 3 kann jeweils ein Endteil E2 axial freistehend belassen werden; bei Auftreten einer Rotorunwucht, wird in betreffender Vertiefung T enthaltenes "leichtes" Füllstück 5 direkt und für sich allein durch ein gewichtlich schwereres Füllstück 5 ersetzt und erst hierauf werden sämtliche Endteile E2 radial umgebogen.

Über die Axialnuten 3 werden die Laufschaufeln 1 nach Einschiebung radial sowie in Umfangsrichtung verankert; die Geometrie der Schaufelfüße 2 und der darauf abgestimmten Axialnuten 3 kann - wie dargestellt - tannenbaum-fuß- oder aber schalbenschwanz- oder hammerkopfartig sein.

Das Sicherungsblech 12 (Fig.4,4a) kann auch im Wege gänzlich nicht miteinander verbundener Blechstreifen 13,14, die z.B. gleich lang und gleich breit sind, angewendet werden.

## Patentansprüche

1. Einrichtung zur axialen Laufschaufelsicherung und zur Beseitigung von Rotorunwuchten bei axial durchströmten Verdichtern oder Turbinen von Gasturbinentriebwerken, bei der die Laufschaufeln (1) mit ihren Schaufelfüßen (2) an über dem Umfang verteilten Axialnuten (3) einer Radscheibe (4) verankert sind, wobei jede Axialnut (3) eine zwischen dem Nutgrund und dem Fußende ausgebildete Vertiefung (T) einschließt, dadurch gekennzeichnet, daß in jede Vertiefung (T) ein auf dem Nutgrund aufsitzendes Füllstück (5) und eine Sicherungsblech (6) eingesetzt sind, das einen längs der Vertiefung (T) verlaufenden Spalt (S) zwischen Fußende und Füllstück (5) überbrückt und das an beiden aus der Vertiefung (T) herausragenden Enden einander entgegengerichtet gegen Stirnflächen des Füllstücks (5), der Radscheibe (4) und des Schaufelfußes (2) umgebogen ist, wobei eine Rotorunwucht durch mindestens ein Füllstück ausgeglichen wird.

2. Einrichtung nach Anspruch 1, dadurch gekennzeichnet, daß das Sicherungsblech (6) an beiden Enden jeweils zwei durch einen Längsschlitz (7) voneinander getrennte Lappen (8, 9) aufweist, von denen der jeweils eine gegen Stirnflächen der Schaufelfüße (2) und eines Scheibenhöckers (10), der jeweils andere gegen Stirnflächen des Radkranzes (11) und des Füllstücks (5) umgebogen wird.

3. Einrichtung nach Anspruch 1, dadurch gekennzeichnet, daß das Sicherungsblech(12) aus zwei Blechstreifen (13,14) besteht, von denen ein Endteil (E1) jeweils gegen einen Schaufelfuß (2) und Stirnflächen zweier Scheibenhöcker (10) und das andere Endteil (E2) gegen das Füllstück (5) und eine Stirnfläche am Radkranz (11) umgebogen wird.

4. Einrichtung nach einem oder mehreren der Ansprüche 1 bis 3, dadurch gekennzeichnet, daß die umgebogenen Lappen (8,9) oder Endteile (E1,E2) des Sicherungsbleches (6;12) eine randseitige Abdichtung der Axialnut (3) und der das Füllstück (5) enthaltenden Vertiefung (T) ausbilden.

5. Einrichtung nach einem oder mehreren der Ansprüche, dadurch gekennzeichnet, daß die jeweils mit gleichförmiger Umrißkontur gestalteten Füllstücke (5) durch unterschiedlich große Materialausnehmungen (M) örtlich spezifisch angepaßte Wuchtmassen ausbilden.

6. Einrichtung nach Anspruch 5, dadurch gekennzeichnet, daß die Füllstücke (5) sämtlichst aus einem Werkstoff niedrigeren spezifischen Gewichts als der Werkstoff der Radscheibe (4) gefertigt sind.

7. Einrichtung nach einem oder mehreren der Ansprüche 1 bis 6, dadurch gekennzeichnet, daß die Füllstücke (5) mit unwuchtspezifischen Material füllungen ausgestattet sind.

8. Einrichtung nach einem oder mehreren der Ansprüche 1 bis 7, dadurch gekennzeichnet, daß die Füllstücke (5) auf die Länge und die Form der Vertiefung (T) - zwischen Sicherungsblech (6;12) und Nutgrund - abgestimmt gestaltet sind.

9. Einrichtung nach Anspruch 8, dadurch gekennzeichnet, daß die Füllstücke (5) zumindest teilweise über ihre Längenerstreckung hinweg mit einem eckenseitig weich gerundeten oder etwa halbkreisförmigen Querschnitt seitlich und unten in der Vertiefung (T) gehalten sind.

10. Einrichtung nach Anspruch 3, dadurch gekennzeichnet, daß das Sicherungsblech (12) aus zwei unterschiedlich breiten Blechstreifen (13, 14) besteht.

11. Einrichtung nach Anspruch 3 oder 10, dadurch gekennzeichent, daß das Sicherungsblech bezüglich der umzubiegenden Endteile oder Lappen aus zwei unterschiedlich langen Blechstreifen zusammengesetzt ist.

12. Einrichtung nach einem oder mehreren der Ansprüche 1 bis 11, dadurch gekennzeichnet, daß das Sicherungsblech (6; 2) mit bereits am einen Ende einander entgegengerichtet umgebogenen Lappen (7, 8) oder Endteilen (E1, E2) angewendet wird.

13. Einrichtung nach Anspruch 1 oder 3, dadurch gekennzeichnet, daß das Sicherungsblech (12) aus zwei Blechstreifen (13, 14) besteht, die unter Belassung unverbundener Endteile (E1, E2) miteinander verlötet oder verschweißt sind.

## Claims

1. A device for axially securing rotor blades and for eliminating rotor imbalance in axial-flow compressors or turbines of gasturbine engines, in which the feet (2) of the rotor blades (1) are anchored in axial grooves (3) distributed over the periphery of a wheel disc (4), wherein each axial groove (3) comprises a cavity (T) formed between the groove base and the foot end, characterised in that a filler piece (5), resting on the groove base, and a securing plate (6) are inserted into each cavity (T), the securing plate (6) bridging a gap (S) extending along the cavity (T) and provided between the foot end and the filler piece (5) and, at both ends projecting from the cavity (T), being bent in opposite directions so as to rest against end surfaces of the filler piece (5), the wheel disc (4) and the blade foot (2), rotor imbalance being compensated by at least one filler piece.

2. A device according to claim 1, characterised in that the securing plate (6) has at each end two tabs (8, 9) separated from each other by a longitudinal slot (7), one tab being bent so as to rest against end surfaces of the blade foot (2) and a disc boss (10) and the other tab being bent so as to rest against end surfaces of the wheel rim (11) and the filler piece (5).

3. A device according to claim 1, characterised in that the securing plate (12) comprises two metal strips (13, 14), one end part (E1) thereof being bent so as to rest against a blade foot (2) and end surfaces of two disc bosses (10), and the other end part (E2) being bent so as to rest against the filler piece (5) and an end surface on the wheel rim (11).

4. A device according to one or more of claims 1 to 3, characterised in that the bent tabs (8, 9) or end parts (E1, E2) of the securing plate (6; 12) form an edge seal for the axial groove (3) and the cavity (T) containing the filler piece (5).

5. A device according to one or more of the claims, characterised in that the filler pieces (5), each having a uniform contour, form balancing masses locally specifically adapted by material recesses (M) of different sizes.

6. A device according to claim 5, characterised in that the filler pieces (5) are all manufactured from a material of lower specific weight than the material of the wheel disc (4).

7. A device according to one or more of claims 1 to 6, characterised in that the filler pieces (5) are provided with imbalance-specific material fillings.

8. A device according to one or more of claims 1 to 7, characterised in that the filler pieces (5) are adapted to the length and the shape of the cavity (T) between the securing plate (6; 12) and the groove base.

9. A device according to claim 8, characterised in that the filler pieces (5) are held at the side and the bottom of the cavity (T) by a cross-section softly rounded or substantially semi-circular at the corner over at least part of their longitudinal extent.

10. A device according to claim 3, characterised in that the securing plate (12) comprises two metal strips (13, 14) of different widths.

11. A device according to claim 3 or 10, characterised in that the securing plate is composed of two metal strips of different lengths with respect to the end parts or tabs to be bent.

12. A device according to one or more of claims 1 to 11, characterised in that the securing plate (6; 12) is applied with tabs (7, 8) or end parts (E1, E2) already bent in opposite directions at one end.

13. A device according to claim 1 or 3, characterised in that the securing plate (12) comprises two metal strips (13, 14) soldered or welded together, leaving unconnected end parts (E1, E2).

## Revendications

1. Dispositif de verrouillage axial des aubes et d'élimination des déséquilibres d'un rotor de compresseur axial ou de turbine de turboréacteur, dans lequel les aubes (1) et leur pied (2) sont ancrés dans des rainures axiales d'un voile de rotor (4), réparti à sa périphérie, chaque rainure axiale (3) comprenant une cavité (T) réalisée entre le fond de la rainure et l'extrémité du pied, caractérisé en ce que chaque cavité (T) reçoit une pièce de remplissage (5) reposant sur le fond de la rainure et une tôle de verrouillage (6) qui enjambe l'intervalle (S) le long de la cavité (T) entre l'extrémité du pied et la pièce de remplissage (5) et qui a ses deux extrémités en saillie de la cavité (T), repliées de manière opposée contre les surfaces frontales de la pièce de remplissage (5), le voile de rotor (4) et le pied d'aube (2), un déséquilibre (balourd) de rotor s'équilibrant par au moins une pièce de remplissage.

2. Dispositif selon la revendication 1, caractérisé en ce que la tôle de verrouillage (6) comporte à ses deux extrémités chaque fois deux pattes (8, 9) séparées l'une de l'autre par une fente longitudinale (7), pattes dont l'une est repliée contre les surfaces frontales des pieds d'aubes (2) et d'un bossage de rotor (10), et-l'autre est repliée contre la surface frontale de la couronne de rotor (11) et la pièce de remplissage (5).

3. Dispositif selon la revendication 1, caractérisé en ce que la tôle de verrouillage (12) se compose de deux bandes de tôle (13, 14), dont une pièce d'extrémité (E1) est repliée chaque fois contre un pied d'aube (2) et les surfaces frontales de deux bossages de rotor (10) et l'autre pièce d'extrémité (E2) est repliée contre la pièce de remplissage (5) et une face frontale de la couronne de rotor (11).

4. Dispositif selon une ou plusieurs des revendications 1 à 3, caractérisé en ce que les pattes repliées (8, 9) ou les pièces d'extrémité (E1, E2) de la tôle de sécurité (6, 12) forment une étanchéité de la rainure axiale (3) au niveau des bords et de la cavité (T) contenant la pièce de remplissage (5).

5. Dispositif selon l'une ou plusieurs des revendications, caractérisé en ce que les pièces de remplissage (5) de même forme que le contour sont réalisées par des cavités (M) de matière, de dimensions différentes, recevant des masses d'équilibrage adaptées localement de manière spécifique.

6. Dispositif selon la revendication 5, caractérisé en ce que les pièces de remplissage (5) sont toutes réalisées en un matériau à densité plus faible que celle du matériau constituant le voile de disque (4).

7. Dispositif selon une ou plusieurs des revendications 1 à 6, caractérisé en ce que les pièces de remplissage (5) sont chargées de matières spécifiques pour les déséquilibres.

8. Dispositif selon l'une ou plusieurs des revendications 1 à 7, caractérisé en ce que les pièces de remplissage (5) sont adaptées par leur longueur et leur forme à la cavité (T) [entre la tôle de sécurité (6, 12) et le fond de la rainure].

9. Dispositif selon la revendication 8, caractérisé en ce que les pièces de remplissage (5) présentent au moins sur une partie de leur longueur, une section à angles arrondis en douceur ou de forme sensiblement semi-circulaire et sont maintenues au fond de la cavité (T).

10. Dispositif selon la revendication 3, caractérisé en ce que la tôle de verrouillage (12) se compose de deux bandes de tôle (13, 14) de largeurs différentes.

11. Dispositif selon la revendication 3 ou 10, caractérisé en ce que la tôle de verrouillage est formée de deux bandes de tôle de longueurs différentes, par rapport à la pièce d'extrémité à cintrer ou aux pattes.

12. Dispositif selon une ou plusieurs des revendications 1 à 11, caractérisé en ce que la tôle de verrouillage (6, 2) est utilisée avec des pattes (7, 8) ou des pièces d'extrémité (E1, E2), recourbées à une extrémité, de manière opposée.

13. Dispositif selon la revendication 1 ou 3, caractérisé en ce que la tôle de verrouillage (12) se compose de deux bandes de tôle (13, 14) brasées ou soudées l'une à l'autre en laissant les parties d'extrémité (E1, E2) non reliées.
